(19) Europäisches Patentamt / European Patent Office / Office européen des brevets

(11) **EP 2 023 519 A1**

(12) **EUROPEAN PATENT APPLICATION**
published in accordance with Art. 153(4) EPC

(43) Date of publication:
**11.02.2009 Bulletin 2009/07**

(51) Int Cl.:
*H04J 15/00* (0000.00)   *H04B 1/10* (2006.01)
*H04B 7/005* (2006.01)   *H04B 7/08* (2006.01)
*H04L 27/01* (2006.01)

(21) Application number: **07744398.4**

(22) Date of filing: **30.05.2007**

(86) International application number:
**PCT/JP2007/060985**

(87) International publication number:
**WO 2007/139145 (06.12.2007 Gazette 2007/49)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **30.05.2006 JP 2006149660**

(71) Applicant: **Sharp Kabushiki Kaisha Osaka-shi, Osaka 545-8522 (JP)**

(72) Inventor: **YAMADA, Ryota Chiba-ken (JP)**

(74) Representative: **Müller - Hoffmann & Partner Patentanwälte Innere Wiener Strasse 17 81667 München (DE)**

(54) **WIRELESS RECEIVER, WIRELESS COMMUNICATION SYSTEM AND WIRELESS RECEIVING METHOD**

(57)    A wireless receiver includes: an interference canceller that generates replicas of interference signals with respect to a desired symbol and cancels the interference signals from reception signals using the replicas; a section extractor that extracts reception signals in a section corresponding to the desired symbol from among the reception signals from which the interference signals have been cancelled; a Fourier transformer that Fourier transforms the reception signals extracted by the section extractor into frequency domain signals; an equalizer that performs frequency domain equalization for the frequency domain signals generated by the Fourier transformer; and an estimate calculator that calculates an estimate of the desired symbol by inversely Fourier transforming the frequency domain signals subjected to the frequency domain equalization performed by the equalizer.

FIG. 2

**Description**

TECHNICAL FIELD

The present invention relates to a wireless receiver, a wireless communication system, and a wireless receiving method, and particularly to a wireless receiver, a wireless communication system, and a wireless receiving method for compensating inter-symbol interference using frequency domain equalization.
Priority is claimed on Japanese Patent Application No. 2006-149660, filed May 30, 2006, the content of which is incorporated herein by reference.

BACKGROUND ART

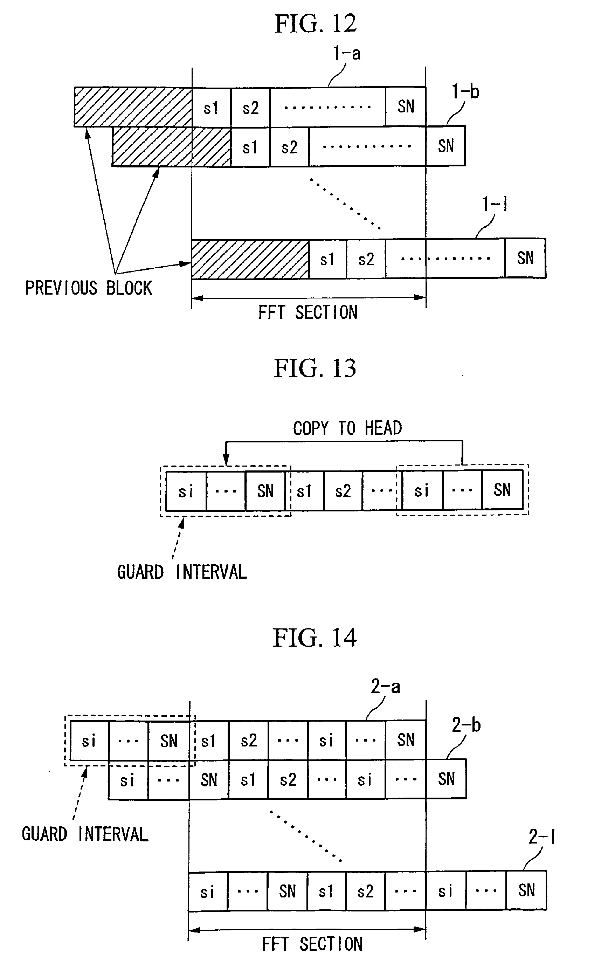

Upon broadband mobile communication, Inter-Symbol Interference (ISI) occurs due to the effect of delayed waves through multipath transmission paths. Various equalizers have been proposed as measures against the inter-symbol interference, among which turbo equalizers that repeat equalizing and decoding using bit likelihood information have attracted attention. Compared with time domain equalization whose calculation amount increases due to the increased number of multipath paths, an FDE (Frequency Domain Equalizer) whose calculation amount hardly depends on the number of paths and can be reduced more than the time domain equalization has attracted attention in a single carrier transmission. A frequency-domain turbo equalizer in a single carrier transmission is disclosed in Non-patent Document 1, for example.
In the frequency domain equalization, the FFT (Fast Fourier Transform) is performed to convert a reception signal into a frequency signal. However, the effect of delayed waves causes periodicity loss of transmission-symbols or interference by a previously transmitted block, which is shown in FIG. 12. FIG. 12 shows a case where transmission symbols s1 to sN are transmitted in a block and received through multipath transmission paths. In FIG. 12, reference character 1-a denotes an earliest wave and reference characters 1-b to 1-1 denote delayed waves. When the FFT point is N and reception signals are converted into frequency signals by the FFT, the delayed waves 1-b to 1-1 include transmission symbols that are not included in the FFT section which causes an error due to periodicity loss and interference due to a signal of a previous block being included in the FFT section. These problems are usually solved by using the GI (Guard Interval) or the CP (cyclic prefix).
Hereinafter, a case of using a guard interval is explained. As shown in FIG. 13, transmission symbols si to sN among transmission symbols s1 to sN are copied to the head of the transmission symbols as a guard interval and transmitted. FIG. 14 shows a state of reception signals at this time. When the maximum delay time of delayed waves is within the guard interval, all the symbols of delayed waves 2-b to 2-1 as well as an earliest wave 2-a are included in the FFT section, thereby causing no effect of the previous block. As a result, inter-symbol interference can be compensated without an error occurring due to the FFT.
Non-patent Document 1: M. S. Yee, M. Sandell, Y. Sun, "Comparison Study of Single-Carrier and Multi-Carrier Modulation Using Iterative Based Receiver for MIMO System", IEEE VTC, Milan, Italy, May 17-19 2004.

DISCLOSURE OF THE INVENTION

Problems to be Solved by the Invention

Problems to be solved are in that the transmission efficiency is reduced due to the guard interval since a wireless receiver using the conventional frequency-domain equalization compensates inter-symbol interference using the guard interval.

Means for Solving the Problems

The present invention is made to solve the above problems. A wireless receiver according to one aspect of the present invention may include: an interference canceller that generates replicas of interference signals with respect to a desired symbol and cancels the interference signals from reception signals using the replicas; a section extractor that extracts reception signals in a section corresponding to the desired symbol from among the reception signals from which the interference signals have been cancelled; a Fourier transformer that Fourier transforms the reception signals extracted by the section extractor into frequency domain signals; an equalizer that performs frequency domain equalization for the frequency domain signals generated by the Fourier transformer; and an estimate calculator that calculates an estimate of the desired symbol by inversely Fourier transforming the frequency domain signals subjected to the frequency domain equalization performed by the equalizer.
According to the wireless receiver, a section corresponding to a desired symbol includes the symbol transmitted by an earliest wave and delayed waves. Thereby, errors do not occur when the Fourier transform is performed for the section. Therefore, inter-symbol interference can be compensated without reducing the transmission efficiency.

In the wireless receiver, the section extractor preferably sets a start position of the section based on a position of the desired symbol in an earliest wave.

According to the wireless receiver, the start position of the section is set to be prior to the position of the desired symbol in the earliest wave, and the section has a sufficient length. As a result, the section includes the desired symbol transmitted by the earliest wave and the delayed waves. Thereby, errors do not occur when the Fourier transform is performed for the section. Therefore, inter-symbol interference can be compensated without reducing the transmission efficiency.

In the wireless receiver, the section extractor preferably changes the length of the section according to the maximum delay amount of the delayed waves.

According to the wireless receiver, the start position of the section is set to be prior to that of the desired symbol in the earliest wave, and the section has such a length as to include the desired symbol of the delayed wave having the maximum delay time. As a result, the section includes the desired symbol transmitted by the earliest wave and the delayed waves. Thereby, errors do not occur when the Fourier transform is performed for the section. Therefore, inter-symbol interference can be compensated without reducing the transmission efficiency.

In the wireless receiver, the section extractor preferably changes the length of the section according to the maximum delay amount of the delayed waves, and the Fourier transformer preferably changes an FFT point for a Fourier transform based on the maximum delay amount of the delayed waves.

According to the wireless receiver, the FFT point for the Fourier transform is set to a value corresponding to the length of the section extracted by the section extractor. Thereby, a calculation amount for the Fourier transform can be reduced

Any one of the aforementioned wireless receivers may further include a reliability calculator that calculates reliability information for each bit of the estimate of the desired symbol calculated by the estimate calculator, and the interference canceller preferably generates the replicas based on the reliability information calculated by the reliability calculator.

The wireless receiver may further include a decoder that error-correction-decodes the reliability information calculated by the reliability calculator, and the interference canceller preferably generates the replicas based on the reliability information error-correction-decoded by the decoder.

A wireless receiver according to another aspect of the present invention may include: an interference canceller that generates replicas of interference signals with respect to a desired symbol and cancels the interference signals from reception signals using the replicas; a section extractor that extracts reception signals in a section corresponding to the desired symbol from among the reception signals from which the interference signals have been cancelled; a Fourier transformer that Fourier transforms the reception signals extracted by the section extractor into frequency domain signals; an equalizer that performs frequency domain equalization for the frequency domain signals generated by the Fourier transformer to generate multiple sequences of signals corresponding to transmission source signals; and an estimate calculator that calculates an estimate of the desired symbol by inversely Fourier transforming the sequences of the signals generated by the equalizer for each of the sequences.

A wireless communication system according to still another aspect of the present invention may include the aforementioned wireless receiver; and a wireless transmitter that transmits multiple different signals from multiple transmission antennas.

A wireless receiving method for a wireless receiver according to still another aspect of the present invention may include: a first step of generating replicas of interference signals with respect to a desired symbol and cancelling the interference signals from reception signals using the replicas, by the wireless receiver; a second step of extracting reception signals in a section corresponding to the desired symbol from among the reception signals from which the interference signals have been cancelled, by the wireless receiver; a third step of Fourier transforming the reception signals extracted at the second step into frequency domain signals, by the wireless receiver; a fourth step of performing frequency domain equalization for the frequency domain signals generated at the third step, by the wireless receiver; and a fifth step of calculating an estimate of the desired symbol from the frequency domain signals subjected to the frequency domain equalization at the fourth step, by the wireless receiver.

A program according to still another aspect of the present invention may cause a computer to function as: an interference canceller that generates replicas of interference signals with respect to a desired symbol and cancels the interference signals from reception signals using the replicas; a section extractor that extracts reception signals in a section corresponding to the desired symbol from among the reception signals from which the interference signals have been cancelled; a Fourier transformer that Fourier transforms the reception signals extracted by the section extractor into frequency domain signals; an equalizer that performs frequency domain equalization for the frequency domain signals generated by the Fourier transformer; and an estimate calculator that calculates an estimate of the desired symbol from the frequency domain signals subjected to the frequency domain equalization performed by the equalizer.

Effects of the Invention

According to the wireless receiver, the wireless communication system, and the wireless receiving method of the present invention, errors do not occur when the Fourier transform is performed for a section if the section corresponding to a desired symbol includes the symbol transmitted by an earliest wave and delayed waves. Therefore, there is a merit in that inter-symbol interference can be compensated without reducing the transmission efficiency.

BRIEF DESCRIPTION OF THE DRAWINGS

FIG. 1 is a block diagram showing an outline configuration of a wireless transmitter according to a first embodiment;
FIG. 2 is a block diagram showing an outline configuration of a wireless receiver according to the first embodiment;
FIG. 3 is a block diagram showing an outline configuration of a part of a signal detector 230 according to the first embodiment which performs processing for a k-th symbol;
FIG 4 is an illustration showing an FFT section extracted by an FFT-signal output unit 231 according to the first embodiment;
FIG 5 is a flowchart showing operations of the wireless receiver according to the first embodiment;
FIG. 6 is an illustration showing an example of an MIMO system;
FIG. 7 is a block diagram showing an outline configuration of a wireless transmitter according to a second embodiment;
FIG. 8 is a block diagram showing an outline configuration of the wireless receiver according to the second embodiment;
FIG 9 is a block diagram showing an outline configuration of a part of a signal detector 330 according to the second embodiment which performs processing for a k-th symbol of a y-th antenna;
FIG. 10 is a chart showing a specification of a simulation according to the second embodiment;
FIG 11 is a graph showing a simulation result according to the second embodiment;
FIG 12 is an illustration showing an effect of multipath transmission paths in frequency domain equalization;
FIG 13 is an explanatory view showing a guard interval; and
FIG. 14 is an illustration showing an effect of the guard interval in the frequency domain equalization.

Descriptions of Numerals

101, 101-1, 101-$N_T$ encoder
102, 102-1, 102-$N_T$ interleaver
103, 103-1, 103-$N_T$ modulator
104, 104-1, 104-$N_T$ transmission antenna
210, 210-1, 210-$N_R$ reception antenna
211, 211-1, 211-$N_R$ frequency converter
212, 212-1, 212-$N_R$ A/D converter
220, 220-1, 220-$N_R$ adding unit (interference canceller)
230, 330 signal detector
231, 231-1, 231-$N_R$ FFT-signal output unit (section extractor)
232, 232-1, 232-$N_R$ serial-to-parallel converter
233, 233-1, 233-$N_R$ FFT unit (Fourier transformer)
234, 334 MMSE unit (equalizer)
235 IFFT unit (estimate calculator)
240, 240-1, 240-$N_T$ MAP detector (reliability calculator)
250, 250-1, 250-$N_T$ deinterleaver
260, 260-1, 260-$N_T$ decoder
270, 270-1, 270-$N_T$ adding unit
280, 280-1, 280-$N_T$ interleaver
290, 390 interference replica generator (interference canceller)
300, 400 channel parameter estimator

BEST MODE FOR CARRYING OUT THE INVENTION

[First Embodiment]

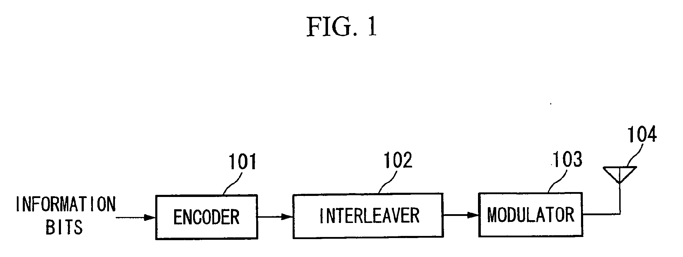

Hereinafter, a first embodiment of the present invention is explained with reference to the attached drawings. FIG 1 shows a block diagram of an outline configuration of a wireless transmitter according to a first embodiment of the present invention.

An encoder 101 encodes information bits using an error correction code such as a convolutional code and a turbo code. An interleaver 102 interleaves an output of the encoder 101.

A modulator 103 maps an output of the interleaver 102 into modulation symbols of BPSK (Binary Phase Shift Keying), QPSK (Quadrature Phase Shift Keying), 16 QAM (Quadrature Amplitude Modulation), 64 QAM or the like, and converts the modulation symbols into a wireless frequency signal.

A transmission antenna 104 wirelessly transmits an output of the modulator 103 as a transmission signal.

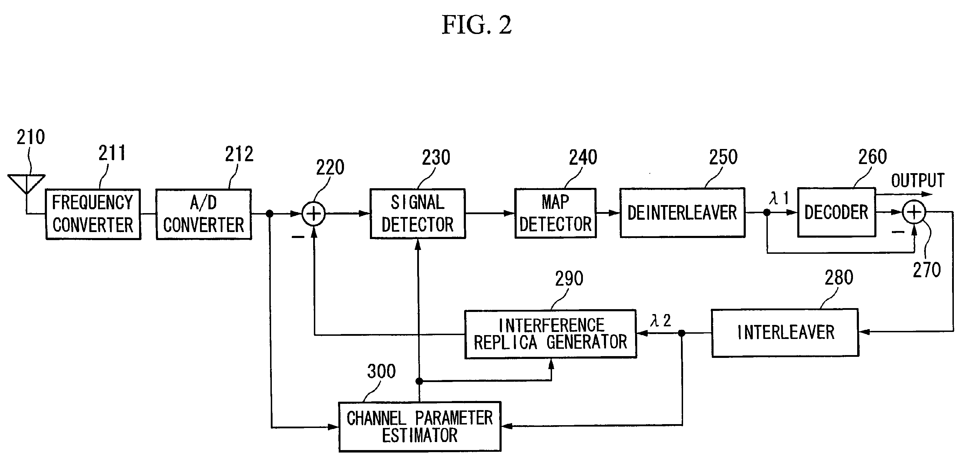

The transmission signal transmitted by the wireless transmitter shown in FIG. 1 passes through multipath transmission paths and is received by a reception antenna 210 of a wireless receiver shown in FIG. 2. A frequency converter 211 converts the wireless frequency signal into a baseband frequency signal. Then, an A/D converter 212 performs an analog-to-digital conversion to convert the baseband frequency signal into a reception baseband signal (hereinafter, "reception signal"). At this time, $(N+L-1)\times 1$ reception signal vector r can be expressed by Expression (1).

[Expression 1]

$$\mathbf{r} = \mathbf{Hs} + \mathbf{n} \tag{1}$$

Matrix H, vector s, and vector n are an $(N+L-1)\times N$ impulse response matrix, an $N\times 1$ transmission signal vector, and an $(N+L-1)\times 1$ noise vector.

Reception signal vector r, the transmission signal vector s, and the impulse response matrix H are expressed by Expression (2)

[Expression 2]

$$\mathbf{r} = \begin{bmatrix} r_1 & \cdots & r_{N+L-1} \end{bmatrix}^T$$

$$\mathbf{s} = \begin{bmatrix} s_1 & \cdots & s_N \end{bmatrix}^T$$

$$\mathbf{H} = \begin{pmatrix} h(0) & \cdots & \mathbf{0} \\ \vdots & \ddots & \vdots \\ h(L-1) & \ddots & h(0) \\ \vdots & \ddots & \vdots \\ \mathbf{0} & \cdots & h(L-1) \end{pmatrix} \tag{2}$$

$r_l$, $s_k$, and $h(p)$ are a 1-th reception symbol, a k-th transmission symbol, and a p-th path impulse response where $l$, $p$, and $k$ are integers such that $1 \leq l \leq N+L-1$, $1 \leq k \leq N$, and $0 \leq p \leq L-1$. L is the path number of the multipath transmission paths including an earliest wave and delayed waves. N is the number of transmission symbols. T denotes transpose of a matrix.

The wireless receiver shown in FIG. 2 calculates transmitted information bits from the reception signal vector r.

FIG. 2 shows a block diagram of an outline configuration of a wireless receiver according to the first embodiment of the present invention. The wireless receiver of the present embodiment includes a reception antenna 210, a frequency converter 211, an A/D converter 212, adding units 220 and 270, a signal detector 230, a MAP (Maximum A Posteriori Probability) detector 240, a deinterleaver 250, a decoder 260, an interleaver 280, a channel parameter estimator 300, and an interference replica generator 290.

The wireless receiver of the present embodiment repeats the processing of the signal detector 230, the MAP detector 240, the deinterleaver 250, the decoder 260, the adding unit 270, the interleaver 280, the interference replica generator 290, and the adding unit 220 for a reception signal corresponding to a section such as a frame including N transmission symbols (hereinafter, "block") until a given condition (explained hereinafter) is satisfied, and calculates the transmitted information bits.

The adding unit 220 subtracts, from the reception signal, replicas of interference signals with respect to each transmission symbol which are generated by the interference replica generator 290, and outputs each transmission-symbol estimation signal. In the present embodiment, the adding unit 220 and the interference replica generator 290 form an interference canceller.

The signal detector 230 calculates each transmission-symbol estimate based on the each transmission-symbol estimation signal with the interference replicas subtracted by the adding unit 220, and a channel estimate estimated by the channel-parameter estimator 300.

The MAP detector (reliability calculator) 240 calculates bit log-likelihood ratios of the transmitted bits included in each transmission symbol from the each transmission-symbol estimate calculated by the signal detector 230.

The deinterleaver 250 deinterleaves the bit log-likelihood ratios calculated by the MAP detector 240 and outputs the deinterleaved bit log-likelihood ratios to the decoder 260.

For the repetition of the processing until the given condition is satisfied, the decoder 260 error-correction-decodes the input encoding-bit log-likelihood ratios and outputs the encoding-bit log-likelihood ratios whose likelihoods have been updated to the adding unit 270. If it is determined that the given condition is satisfied, the decoder 260 does not output the log-likelihood ratios to the adding unit 270, but error-correction-decodes the input bit log-likelihood ratios which is then converted into hard decision data to obtain transmission information bits as a final output. Although the given condition is that the transmission information bits obtained by the error correction decoding have no errors or that the processing has been repeated for the given number of times, the details thereof are explained hereinafter.

Although the decoder 260 outputs the encoding-bit log-likelihood ratios obtained by replacing the bit log-likelihood ratios of the transmission information bits to the adding unit 270, encoding-bit log-likelihood ratios obtained by error-correction-encoding the bit log-likelihood ratios of the transmission information bits may be output to the adding unit 270.

The adding unit 270 subtracts the encoding-bit log-likelihood ratios output by the deinterleaver 250 from the output of the decoder 260.

The interleaver 280 interleaves the output of the adding unit 270 and outputs the interleaved encoding-bit log-likelihood ratios.

The interference replica generator 290 generates interference replicas for each transmission symbol based on the encoding-bit log-likelihood ratios interleaved by the interleaver 280.

The channel parameter estimator 300 calculates a channel estimate that is an impulse-response estimate of each multipath transmission path using a known signal such as a pilot signal extracted from the reception signal, or the transmission symbol replicas based on the encoding-bit log-likelihood ratios.

Hereinafter, each of the units is explained in detail.

The adding unit 220 cancels interference by subtracting an interference replica vector $i_k$ with respect to the k-th transmission symbol from a reception signal vector r. The signal after the interference with respect to the k-th transmission symbol has been cancelled is a vector $t_k = r - i_k$ where k is an integer such that $1 \leq k \leq N$. In other words, the adding unit 220 outputs N signal vectors $t_k$ after the interference cancelling to the signal detector 230.

The signal detector 230 calculates a transmission-symbol estimate $s^m_k$ by equalization based on the signal vector $t_k$ after the interference cancelling and the channel estimate estimated by the channel parameter estimator 300. Although it is explained in the present embodiment that the signal detector 230 parallelly processes the signal vectors $t_1$ to $t_N$ after the interference cancelling and output from the adding unit 220, the signal detector 230 may process the signal vectors $t_1$ to $t_N$ by processing one signal vector $t_k$ at one time and then repeating the process N times.

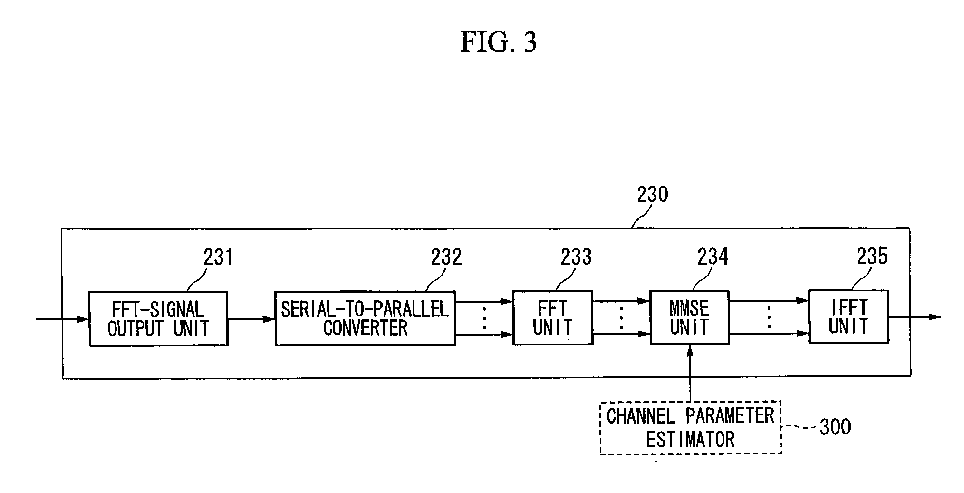

FIG. 3 shows an outline configuration of a block of the signal detector 230 that processes the signal vector $t_k$ after the interference cancelling and calculates the k-th transmission-symbol estimate. The signal detector 230 includes, as the block for calculating the k-th transmission-symbol estimate, an FFT (Fast Fourier Transform) signal output unit 231, a serial-to-parallel converter 232, an FFT unit 233, an MMSE (Minimum Mean Square Error) unit 234, and an IFFT (Inverse Fast Fourier Transform) unit 235. In other words, the signal detector 230 includes N identical blocks that parallelly process N signal vectors $t_k$ after the interference cancelling and calculate N transmission-symbol estimates.

Upon receiving the signal vector $t_k$, the FFT-signal output unit (section extractor) 231 extracts a signal in a section to be processed by the FFT unit 233 from the signal vector $t_k$, and outputs the extracted signal. The FFT-signal output unit 231 will be explained in detail hereinafter.

Upon receiving the signal output from the FFT-signal output unit 231, the serial-to-parallel converter 232 performs a serial-to-parallel conversion on the signal output from the FFT-signal output unit 231.

The FFT unit (Fourier transformer) 233 performs time-to-frequency conversion by performing a Fourier transform for the signal converted by the serial-to-parallel converter 232.

The MMSE unit (equalizer) 234 performs interference signal suppression for the signal subjected to the time-to-frequency conversion by the FFT unit 223, and detects a frequency-domain transmission-symbol estimate. The MMSE unit 234 will be explained in detail hereinafter.

The IFFT unit (estimate calculator) 235 performs frequency-to-time conversion on the frequency-domain k-th transmission-symbol estimate detected by the MMSE unit 234 and calculates a time-domain k-th transmission-symbol estimate $s^m_k$ (hereinafter, an estimate is appended m to the upper right of a reference character). When the FFT-signal output unit 231 sets an FFT start position to the position of the desired symbol (k-th transmission symbol) of the earliest wave, the first symbol of the signal after the IFFT performed by the IFFT unit 234 becomes the desired symbol. Thereby, the frequency domain averaging may be performed to obtain an element corresponding to the symbol.

Hereinafter, the FFT-signal output unit 231 is explained in detail.

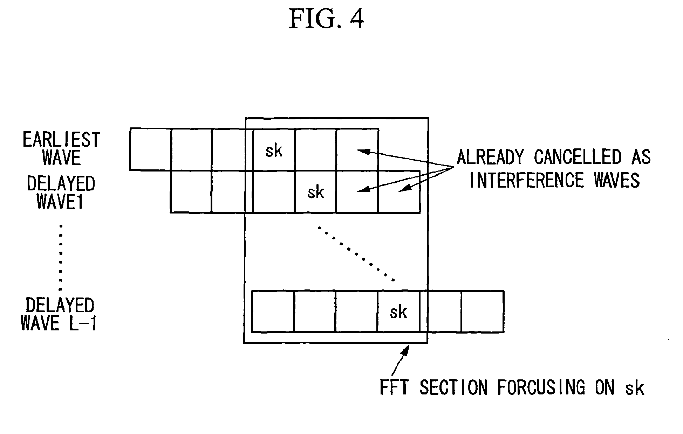

As shown in FIG. 4, the signal $t_k$ after the interference cancelling that is an input of the FFT-signal output unit 231, i.e., an output of the adding unit 220 with respect to the transmission symbol $s_k$, includes only signals of the transmission symbol $s_k$ of the earliest wave and the transmission symbol $s_k$ of each delayed wave and excludes a signal of another transmission symbol. FIG. 4 shows an ideal signal $t_k$ in the case where the interference cancelling is perfectly performed.

The FFT-signal output unit 231 extracts a section in which all of the transmission symbols $s_k$ of the earliest wave and the delayed waves are included from the signal $t_k$ after the interference cancelling, and outputs the signals in the extracted section as Fourier transform targets. A start position of the extracted section is set to the position of the transmission symbol $s_k$ of the earliest wave, for example. When the transmission symbol $s_k$ is the first transmission symbol $s_l$, the head of the earliest wave becomes the start position, which is the position of the first reception symbol $r_l$ if indicated by the position of the reception signal shown in Expression (2). Therefore, in the case of the k-th transmission symbol $s_k$, the start position thereof may be set to the position of the k-th reception symbol $r_k$.

As a result, the transmission symbol of each delayed wave is always included in the FFT section unless the path number L exceeds the FFT point.

The start position may be prior to $r_k$ as long as the k-th transmission symbol $s_k$ of each path is included in the FFT section. Further, as long as the transmission symbol of each path is included in the FFT section, the FFT-signal output unit 231 may extract the minimum number, i.e., the path number L of the signals, each transmission symbol of which is included in the section, or signals in a section corresponding to the maximum delay time among these paths, and output the extracted signals as the Fourier transform targets.

In this manner, the transmission symbols $s_k$ of the earliest wave and each delayed wave are included in the FFT section. Thereby, no errors due to the Fourier transform performed by the FFT unit 223 occur. Therefore, inter symbol interference can be compensated without a guard interval, preferable properties can be attained, and the deterioration of the transmission efficiency due to an insertion of the guard interval can be prevented.

Hereinafter, the MMSE unit 234 is explained in detail.

A signal to be input to the MMSE unit 234, i.e., a frequency signal at the frequency point w output from the FFT unit 233, is denoted by $r^k(w)$ where w is an integer such that $1 \leq w \leq N_f$, and $N_f$ in the FFT unit 233 denotes an FFT point.

The MMSE unit 234 performs the frequency domain equalization independently at each frequency point w and acquires a frequency-domain k-th transmission-symbol estimate. Specifically, the MMSE unit 234 multiplies the frequency signal $r^k(w)$ output by the FFT unit 233 by the following MMSE weighting coefficient M (w).

[Expression 3]

$$M(w) = \frac{H^{m*}(w)}{H^{m*}(w)H^m(w) + \sigma_n^2}$$

$$(3)$$

* indicates a complex conjugate. $H^m(w)$ is an estimate of a transfer function, and $\sigma_n^2$ is the average reception noise power.

The MMSE unit 234 Fourier-transforms a channel estimate $[h^m(0) \dots h^m(L-1)]^T$ received from the channel parameter estimator 300 to acquire the transfer function $H^m(w)$.

The channel parameter estimator 300 acquires the channel estimate $[h^m(0) \dots h^m(L-1)]^T$ using a signal known by the transmitter and the receiver such as a pilot signal, for example.

The channel parameter estimator 300 may calculate the channel estimate using a transmission-symbol replica vector $s^r$ in lieu of the pilot signal. $s^r$ will be explained hereinafter. A method of calculating a channel estimate is disclosed in "T. Abe, T. Matsumoto, 'Space-Time Turbo Equalization in Frequency-Selective MIMO Channels', IEEE trans. on VT, Vol. 52, No. 3, MAY, 2003.", for example.

In addition, the channel parameter estimator 300 calculates $\sigma_n^2$ using the pilot signal $s_p$, a reception signal $r_p$ when the pilot signal is transmitted, an estimate $H_p^m$ of an impulse response matrix corresponding to the pilot signal, as follows.

[Expression 4]

$$\sigma_n^2 = E\left[\left\|\mathbf{r}_p - \mathbf{H}_p^m \mathbf{s}_p\right\|^2\right]$$

(4)

*E*[ ] indicates an estimate and ‖ ‖ indicates the Euclid vector norm.

Alternatively, $\sigma_n^2$ may be calculated using the transmission symbol replica vector $s^r$ as follows.

[Expression 5]

$$\sigma_n^2 = E\left[\left\|\mathbf{r} - \mathbf{H}^m \mathbf{s}^r\right\|^2\right]$$

(5)

The transmission symbol replica vector $s^r$ is a vector having the transmission symbol replicas as elements, which can be expressed by Expression (6).

[Expression 6]

$$\mathbf{s}^r = \left[s_1^r \quad \cdots \quad s_N^r\right]^T$$

(6)

An example of the k-th element $s_k^r$ of $s^r$ will be explained with the interference replica generator 290.

Although the case where the MMSE unit 234 multiplies the frequency signal $r^k$ (w) by the MMSE weighting coefficient M (w) is explained above, a filter coefficient with the use of the ZF (Zero Forcing) criteria may be used.

The MAP detector 240 calculates log-likelihood ratios of the bits included in each of the N k-th transmission-symbol estimates $s_k^m$ output by the signal detector 230 (IFFT unit 235). In other words, the MAP detector 240 calculates a log-likelihood ratio of each bit included in each transmission symbol, and thereby the log likelihood ratios whose number of pieces is the number of the transmission symbols N multiplied by the number of bits per transmission symbol.

The signal to be input to the MAP detector 240, i.e., the k-th transmission-symbol estimate $s_k^m$ output by the signal detector 230 can be expressed by Expression (7).

[Expression 7]

$$s^m_k = \mu s_k + \eta \tag{7}$$

$\mu$ denotes an equivalent amplitude and $\eta$ denotes an error signal where the mean is zero and the variance is $v^2$. The equivalent amplitude $\mu$ and the variance $v^2$ are expressed by Expressions (8) and (9).
[Expression 8]

$$\mu = \frac{1}{N_f} \sum_{w=1}^{N_f} \frac{H^{m*}(w)\,H^m(w)}{H^{m*}(w)H^m(w) + \sigma_n^2} \tag{8}$$

$$v^2 = \mu - \mu^2 \tag{9}$$

The QPSK modulation is shown as an example of the MAP detector 240 calculating bit likelihood ratios from the k-th transmission-symbol estimate $s^m_k$ using the equivalent amplitude $\mu$. A QPSK modulation signal can be expressed by Expression (10) where a bit sequence when the k-th transmission symbol is transmitted is $b_0$, $b_1$ ($b_0$ and $b_1$ are 1 or -1).
[Expression 9]

$$s_k = \frac{1}{\sqrt{2}}(b_0 + jb_1) \tag{10}$$

j is an imaginary number.
Then, the MAP detector 240 calculates a bit log-likelihood ratio $\lambda_1$ ($b_0$) of $b_0$ using Expression (11).
[Expression 10]

$$\lambda_1(b_0) = \frac{2\mathrm{Re}(s^m_k)}{\sqrt{2}(1-\mu)} \tag{11}$$

Re ( ) denotes the real part of a complex number. A bit log-likelihood ratio $\lambda_1$ ($b_1$) of $b_1$ can be acquired by replacing the real part of Expression (11) with the imaginary part.
The deinterleaver 250 deinterleaves the bit log-likelihood ratios $\lambda_1$ that are the output of the MAP detector 240 and outputs the deinterleaved bit log-likelihood ratios to the decoder 260.
The decoder 260 performs error correction decoding on the deinterleaved encoding bit log-likelihood ratios and acquires the bit log-likelihood ratios of the transmission information bits and transmission information bits of the hard-decided bit log-likelihood ratios. If the number of repetition times is less than a given number of times and an error is detected in the acquired transmission information bits, the decoder 260 outputs the encoding-bit log-likelihood ratios whose likelihoods have been updated by the error correction decoding to the adding unit 270.

The adding unit 270 subtracts the encoding-bit log-likelihood ratios output from the deinterleaver 250 from the encoding-bit log-likelihood ratios output from the decoder 260.

The interleaver 280 interleaves the encoding-bit log-likelihood ratios output from the adding unit 270 to acquire a log-likelihood ratio $\lambda_2$ of each bit, and outputs the acquired log-likelihood ratio $\lambda_2$ of each bit to the interference replica generator 290 and the channel parameter estimator 300.

The interference replica generator 290 generates a replica of the interference signal with respect to each transmission symbol. In other words, the interference replica generator 290 generates N interference replica vectors $r^i_k$.

The interference replica generator 290 generates the transmission symbol replica from the log-likelihood ratio $\lambda_2$ of each bit input from the interleaver 280 in the following manner. For example, when bit log-likelihood ratios constituting the k-th transmission-symbol replica $s^r_k$ (hereinafter, a replica is appended r at the upper right of a reference character) are $\lambda_2(b_0)$ and $\lambda_2(b_1)$ in the case of QPSK modulation, $s^r_k$ can be expressed by Expression (12).

[Expression 11]

$$s^r_k = \frac{1}{\sqrt{2}}\tanh(\lambda_2(b_0)/2) + \frac{j}{\sqrt{2}}\tanh(\lambda_2(b_1)/2) \tag{12}$$

The interference replica generator 290 calculates the interference replica vector $r^i_k$ (hereinafter, an interference replica is appended i at the upper right of a reference character) from the calculated symbol replica $s^r_k$ in the following manner.

[Expression 12]

$$\mathbf{r}^i_k = \mathbf{H}^m \mathbf{s}^i_k \tag{13}$$

$s^r_k$ is a transmission-symbol replica vector whose k-th element is zero, and can be expressed by Expression (14).
[Expression 13]

$$\mathbf{s}^i_k = \begin{bmatrix} \mathbf{s}^r_1 & \cdots & \mathbf{s}^r_{k-1} & 0 & \mathbf{s}^r_{k+1} & \cdots & \mathbf{s}^r_N \end{bmatrix}^T \tag{14}$$

The interference replica generator 290 calculates and outputs the interference replica vector $r^i_k$ for all k.

Then, the interference cancelling performed by the adding unit 220 and the processing of the signal detector 230, the MAP detector 240, the deinterleaver 250, and the decoder 260 follow as explained above. This operation is repeated until it is determined upon the error correction decoding performed by the decoder 260 that the decoded information bits have no error, or until the processing is repeated the given number of repetition times.

The decoder 260 determines the presence or absence of an error by determining whether or not the CRC (Cyclic Redundancy Check) appended to the information bits on the transmission side matches the CRC calculated from the information bits decoded by the decoder 260.

Although it is explained above that the repetition condition is that it is determined that the decoded information bits have no errors in the error correction decoding performed by the decoder 260, or that the processing is repeated the given number of repetition times, only one of the conditions may be used.

At the first processing among the repetition processing, there is no output of the decoder 260 for a reception signal of a target block and no interference replica vector based thereon. Then, the adding unit 220 inputs the reception signal to the signal detector 230 without the interference cancelling. In other words, the processing of the signal detector 230 is not performed for each desired symbol, all of the transmission-symbol estimates $s^m{}_k$ are calculated from the input (reception signal). At this time, as a matter of course, an error due to inter symbol interference occurs upon the Fourier transform performed by the FFT unit 233 of the signal detector 230. In a similar manner as the processing explained above, the MMSE unit 234 multiplies, by Expression (3), the signal R (w) that is the reception signal converted into a frequency domain signal at each frequency point w to perform frequency domain equalization. Then, the IFFT unit 235 performs time domain conversion by the inverse Fourier transform to detect a transmission-symbol estimate.

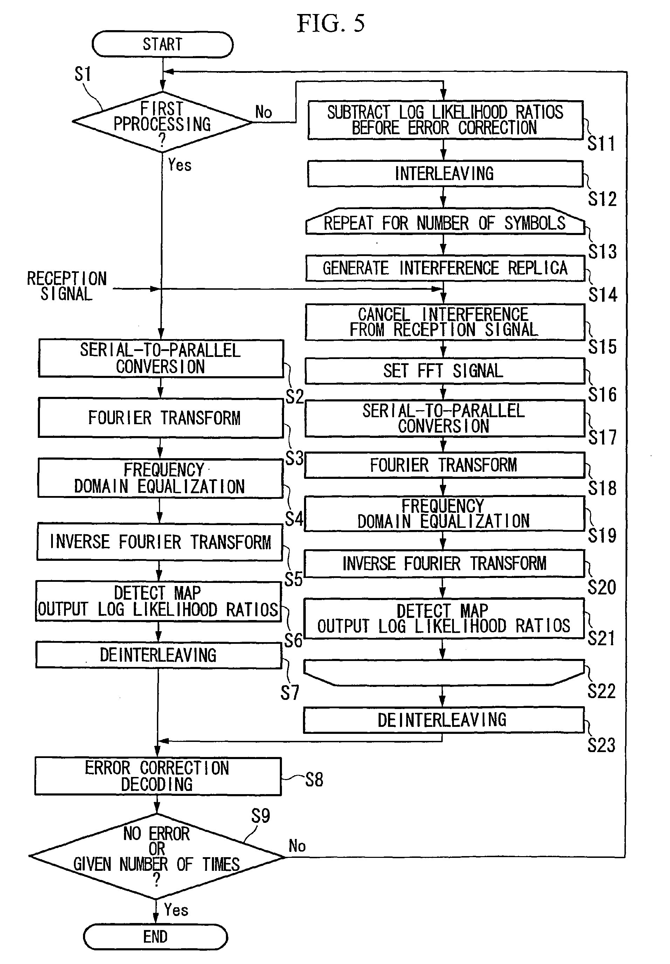

FIG 5 shows a flowchart of reception processing for a reception signal of a block in the first embodiment. Explanation is given with an assumption that the interference replica generator 290, the adding unit 220, the FFT-signal output unit 231, the serial-to-parallel converter 232, the FFT unit 233, the MMSE unit 234, the IFFT unit 235, the MAP detector 240, and the deinterleaver 250 do not perform the processing for each transmission symbol parallelly, but sequentially repeat the processing the number of times corresponding to the number of transmission symbols N included in the block.

The wireless receiver determines whether or not it is the first processing (S1). Since it is the first processing here, the process proceeds to step S2. Upon receiving a serial reception signal, the serial-to-parallel converter 232 converts the serial reception signal into parallel signals to be output (S2). Upon receiving the parallel reception signals converted by the serial-to-parallel converter 232, the FFT unit 233 performs time-to-frequency conversion by Fourier transforming the reception signals (S3). Upon receiving the reception signals subjected to the time-to-frequency conversion by the FFT unit 233, the MMSE unit 234 performs frequency domain equalization for the reception signals to detect transmission symbols all at once (S4). Upon receiving the frequency-domain transmission symbols from the MMSE unit 234, the IFFT unit 235 performs frequency-to-time conversion by inversely Fourier transforming the transmission symbols, and outputs transmission-symbol estimates (S5). Upon receiving the transmission-symbol estimates from the IFFT unit 235, the MAP detector 240 calculates and outputs bit log-likelihood ratios of the bits included in each transmission-symbol estimate (S6). Upon receiving the log-likelihood ratios from the MAP detector 240, the deinterleaver 250 deinterleaves the bit log-likelihood ratios by rearranging the order thereof (S7).

Upon receiving the encoding-bit log-likelihood ratios from the deinterleaver 250, the decoder 260 error-correction-decodes the encoding-bit log-likelihood ratios (S8). If a decoding result has no errors or the process has been repeated the given number of times, the decoder 260 outputs a hard-decision result, and the process ends (S9). If the process has not repeated the given number of times and the decoding result has an error, the process returns to step S 1 and repeats therefrom. Although it is determined at step S 1 whether or not it is the first processing (S1), it is not the first processing, but the second processing here. Therefore, the process proceeds to step S 11. Upon receiving the encoding-bit log-likelihood ratios from the decoder 260, the adding unit 270 subtracts the encoding-bit log-likelihood ratios output from the deinterleaver 250 from the received encoding-bit log-likelihood ratios, and outputs the acquired encoding-bit log-likelihood ratios (S11). Upon receiving the encoding-bit log-likelihood ratios from the adding unit 270, the interleaver 280 interleaves the received encoding-bit log-likelihood ratios by rearranging the order thereof (S 12).

Then, the processing from S 14 to S21 is repeated the number of times corresponding to the number of the transmission symbols N, one transmission symbol is processed in each repetition, and encoding-bit log-likelihood ratios of the first to the N-th transmission symbols are calculated (S13). Firstly, the interference replica generator 290 generates desired interference replicas from the encoding-bit log-likelihood ratios of transmission symbols other than the desired transmission symbol (S14). Upon receiving the interference replicas from the interference replica generator 290, the adding unit 220 subtracts the interference replicas from the reception signal to perform the interference cancelling for the desired transmission symbol (S 15). Upon receiving the signal after the interference cancelling, the FFT-signal output unit 231 extracts, from the received signal, a signal in a section, the first position of which is set to the position of the desired transmission symbol in an earliest wave so that deterioration due to the Fourier transform does not occur, and outputs the extracted signal as an FFT signal (S16). The serial-to-parallel converter 232 performs serial-to-parallel conversion on the FFT signal received from the FFT-signal output unit 231 (S17). The FFT unit 233 performs time frequency conversion by Fourier-transforming the signals converted by the serial-to-parallel converter 232 (S18). The MMSE unit 234 detects the desired transmission symbol by the frequency domain equalization for the signal time-frequency-converted by the FFT unit 233 (S19).

The IFFT unit 235 performs frequency-to-time conversion by inversely Fourier transforming the desired transmission symbol detected by the MMSE unit 234, and acquires the desired transmission-symbol estimate (S20). Upon receiving the desired transmission-symbol estimate from the IFFT unit 235, the MAP detector 240 calculates log-likelihood ratios of the encoding bits included in the estimate (S21). The processing from S14 to S21 is repeated for all of the transmission symbols (S22).

The deinterleaver 250 deinterleaves the encoding-bit log-likelihood ratios of the first to the N-th transmission symbols by rearranging the order thereof (S23). Upon receiving the encoding-bit log-likelihood ratios from the deinterleaver 250, the decoder 260 performs error correction decoding on the encoding-bit log-likelihood ratios (S8). If it is determined that a decoding result has no errors or that the processing has been repeated the given number of times, the decoder 260 outputs a hard-decision result, and the process ends (S9). If it is determined that the processing has not been repeated the given number of times and the decoding result has an error, the process returns to step S1 and repeats therefrom.

To reduce a calculation amount upon the FFT focusing on the symbol, the frequency domain equalization can be performed using, as the FFT point, a power of two which is equal to the maximum delay amount of the delayed waves, or which is the minimum value exceeding the maximum delay amount. Thereby, the calculation amount of the frequency domain equalization can be reduced.

[Second Embodiment]

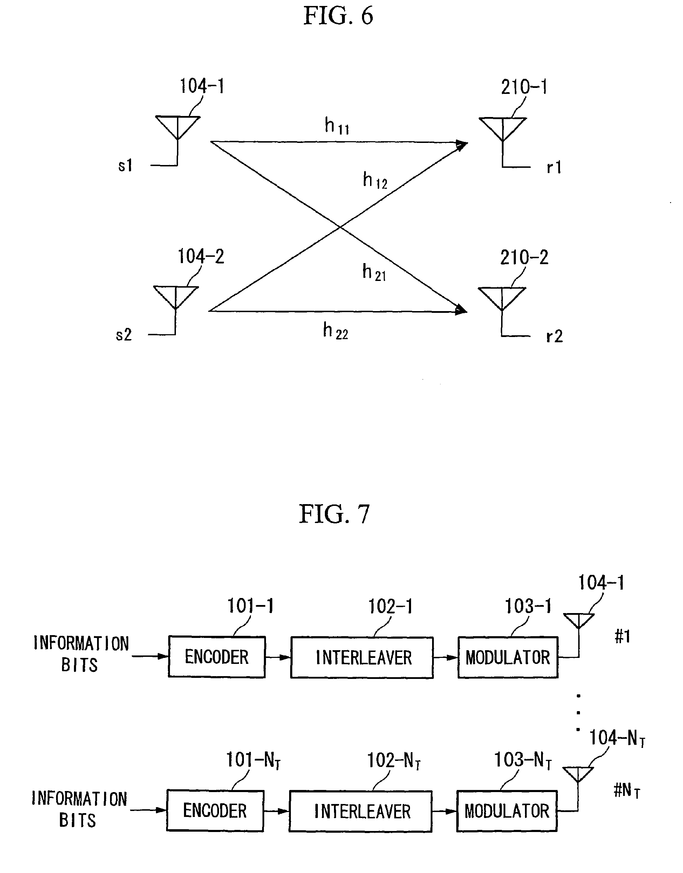

The system using one transmission antenna and one reception antenna is explained as the first embodiment. The present invention as applied to an MIMO (Multiple Input Multiple Output) system using multiple transmission antennas and multiple reception antennas is explained here as a second embodiment. In the MIMO system, different signals are transmitted from multiple transmission antennas at the same time and at the same frequency, and thereby the frequency utilization efficiency can be expected to increase. However, CCI (Co Channel Interference) occurs. FIG. 6 shows an MIMO system with flat fading (simple fading) and including two transmission antennas (a first transmission antenna 104-1 and a second transmission antenna 104-2) and two reception antennas (a first reception antenna 210-1 and a second reception antenna 210-2). When transmission signals to be transmitted from the transmission antennas 104-1 and 104-2 are $s1$ and $s2$, reception signals are as follows.

[Expression 14]

$$\begin{cases} r1 = h_{11}s1 + h_{12}s2 \\ r2 = h_{21}s1 + h_{22}s2 \end{cases}$$

$$(14)$$

$r1$ and $r2$ denote reception signals received by the first and the second reception antennas 210-1 and 210-2, and $h_{ab}$ (a and b are one or two) denotes an impulse response between the b-th transmission antenna and the a-th reception antenna. As can be understood from Expression (15) and FIG 6, each reception antenna receives different signals $s1$ and $s2$ that are transmitted from the multiple transmission antennas and multiplexed, which is referred to as CCI. The receiver must demultiplex the multiplexed signals. In the present embodiment, the CCI that occurs when the present invention is applied to the MIMO system is added to the multipath interference in the first embodiment. Therefore, these interferences are suppressed at the same time.

An MIMO system including $N_T$ transmission antennas and $N_R$ reception antennas is assumed where $N_T$ and $N_R$ are natural numbers. FIG. 7 shows a block diagram of an outline configuration of a wireless transmitter in the present embodiment. Encoders 101-1 to 101-$N_T$, interleavers 102-1 to 102-$N_T$, modulators 103-1 to 103-$N_T$, and transmission antennas 104-1 to 104-$N_T$ of the wireless transmitter parallelly perform the same processing as performed by the units shown in FIG. 1 in the configurations connected to the transmission antennas 104-1 to 104-$N_T$. Different information bits are input to the transmission antennas 104-1 to 104-$N_T$. Transmission signals transmitted from the $N_T$ transmission antennas pass through multipath transmission paths and are received by the $N_R$ reception antennas. At this time, a transmission and reception signal model applied to the MIMO system is as follows.

[Expression 15]

$$\mathbf{r}_{MIMO} = \mathbf{H}_{MIMO}\mathbf{s}_{MIMO} + \mathbf{n}_{MIMO}$$

$$(16)$$

$r_{MIMO}$, $H_{MIMO}$, and $s_{MIMO}$ are an $N_R(N+L-1)\times1$ reception signal vector, an $N_R(N+L-1)\times N_TN$ MIMO impulse response matrix, an $N_T N\times1$ transmission signal vector, and include elements shown in Expression (17). $n_{MIMO}$ is an $N_R(N+L-1)\times1$ noise vector.

[Expression 16]

$$\mathbf{r}_{MIMO} = \begin{bmatrix} \mathbf{r}(1)^T & \cdots & \mathbf{r}(N+L-1)^T \end{bmatrix}^T$$

$$\mathbf{s}_{MIMO} = \begin{bmatrix} \mathbf{s}(1)^T & \cdots & \mathbf{s}(N)^T \end{bmatrix}^T$$

$$\mathbf{H}_{MIMO} = \begin{pmatrix} \mathbf{H}(0) & & \mathbf{0} \\ \vdots & \ddots & \\ \mathbf{H}(L-1) & & \mathbf{H}(0) \\ & \ddots & \vdots \\ \mathbf{0} & & \mathbf{H}(L-1) \end{pmatrix}$$

(17)

$L$ is the number of paths, and $N$ is the number of transmission symbols.

An $N_R\times1$ l-th reception-symbol vector r ($l$), an $N_T\times1$ k-th transmission-symbol vector s (k), $N_R\times N_T$ channel matrix H ($p$) of a p-th path can be expressed as Expression (18) where $l$, $k$, and $p$ are integers such that $1\leq l\leq N+L-1$, $1\leq k\leq N$, and $0\leq p\leq L-1$.

[Expression 17]

$$\mathbf{r}(k) = \begin{bmatrix} r_1(k) & \cdots & r_{N_R}(k) \end{bmatrix}^T$$

$$\mathbf{s}(k) = \begin{bmatrix} s_1(k) & \cdots & s_{N_T}(k) \end{bmatrix}^T$$

$$\mathbf{H}(p) = \begin{pmatrix} h_{11}(p) & \cdots & h_{1N_T}(p) \\ \vdots & \ddots & \vdots \\ h_{N_R1}(p) & \cdots & h_{N_RN_T}(p) \end{pmatrix}$$

(18)

$N_R$ and $N_T$ are the number of the reception antennas and the transmission antennas. $r_x$, $s_y$, and $h_{xy}$ are a reception signal received by an x-th reception antenna, a transmission signal transmitted by a y-th transmission antenna, and an impulse response between the y-th transmission antenna and the x-th reception antenna. x and y are integers such that $1\leq x\leq N_R$ and $1\leq y\leq N_T$.

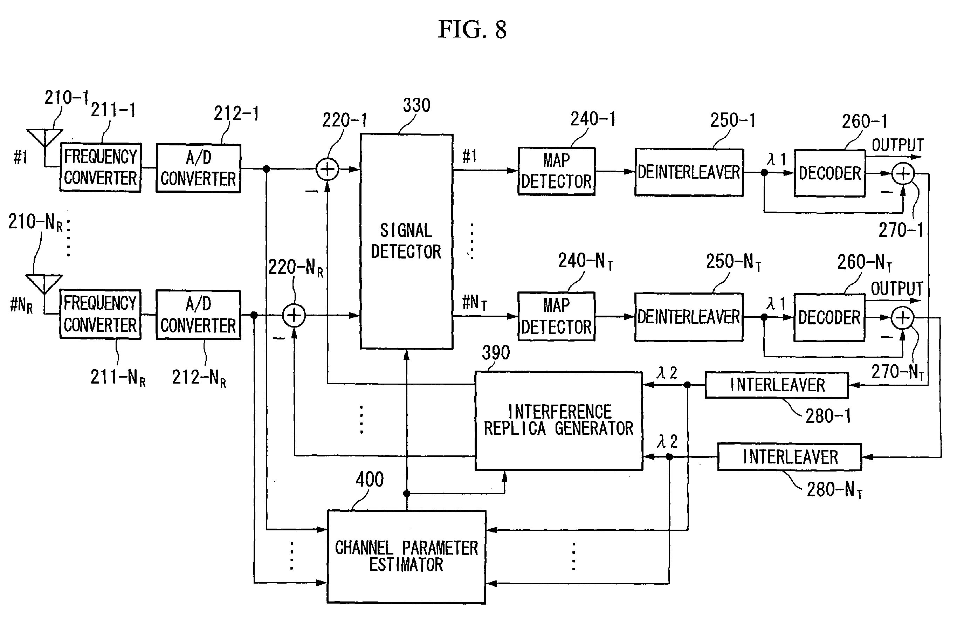

FIG 8 shows a block diagram of an outline configuration of the wireless receiver according to the second embodiment of the present invention.

Similar to the wireless receiver in the first embodiment, the wireless receiver in the present embodiment repeats, for signals in a section such as one frame (hereinafter, "block") including N transmission symbols and received by the reception antennas 210-1 to 210-$N_R$, the processing of a signal detector 330, MAP detectors 240-1 to 240-$N_T$, deinterleavers 250-1 to 250-$N_T$, decoders 260-1 to 260-$N_T$, adding units 270-1 to 270-$N_T$, interleavers 280-1 to 280-$N_T$, an interference replica generators 390, and adding units 220-1 to 220-$N_T$ until a given condition (explained hereinafter) is satisfied, and calculates transmitted information bits.

The reception antennas 210-1 to 210-$N_R$ output received wireless frequency signals. Frequency converters 211-1 to 211-$N_R$ convert wireless frequency signals output from the reception antennas 210-1 to 210-$N_R$ into baseband frequency signals.

A/D converters 212-1 to 212-$N_R$ perform analog-to-digital conversion on the outputs of the frequency converters 211-1 to 211-$N_R$ and output reception signals.

The adding units 220-1 to 220-$N_R$ subtract interference replicas generated by the interference replica generator 390 from the reception signals.

In the present embodiment similar to the first embodiment, the signal detector 330 performs processing parallelly and detects a transmission-symbol estimate for each transmission symbol. The signal detector 330 outputs the detected transmission-symbol estimates as $N_T$ sequences each including transmission-symbol estimates, transmission sources of which are the transmission antennas 104-1 to 104-$N_T$.

The MAP detectors (reliability calculators) 240-1 to 240-$N_T$, the deinterleavers 250-1 to 250-$N_T$, the decoders 260-1 to 260-$N_T$, the adding units 270-1 to 270-$N_T$, the interleavers 280-1 to 280-$N_T$ perform processing for each sequence, and each processing is the same as that in the first embodiment.

The interference replica generator 390 generates interference replicas with respect to the transmission symbols transmitted from the transmission antennas 104-1 to 104-$N_T$ based on encoding-bit log-likelihood ratios $\lambda_2$ of the $N_T$ sequences received from the deinterleavers 250-1 to 250-$N_T$, and the channel estimates of paths received from a channel parameter estimator 400. The transmission replicas can be generated in the same manner as the first embodiment (for example, Expression (12)). An interference replica $\mathbf{r}^i_{y,k}$ with respect to the k-th transmission symbol transmitted by the y-th transmission antenna can be calculated using Expression (24).

[Expression 18]

$$\mathbf{r}^i_{y,k} = \mathbf{H}^m_{MIMO}\,\mathbf{s}^i_{y,k}$$

$$(24)$$

$H^m_{MIMO}$ is an estimate of the MIMO impulse response matrix. $\mathbf{s}^i_{y,k}$ is a vector including a transmission symbol replica of each transmission symbol transmitted from each transmission antenna as an element, and only an element of which corresponding to the k-th transmission symbol transmitted from the k-th antenna is zero. The vector can be expressed as follows.

[Expression 19]

$$\mathbf{s}^i_{y,k} = \begin{bmatrix} \tilde{\mathbf{s}}_y(0) & \cdots & \tilde{\mathbf{s}}_y(k) & \cdots & \tilde{\mathbf{s}}_y(N) \end{bmatrix}^T$$

$$\tilde{\mathbf{s}}_y(k) = \begin{bmatrix} s^i_1(k) & \cdots & s^i_{y-1}(k) & 0 & s^i_{y+1}(k) & \cdots & s^i_{N_T}(k) \end{bmatrix}^T$$

$$(25)$$

The interference replica generator 390 generates the interference replica $\mathbf{r}^i_{y,k}$ for every y and k (y and k are integers such that $1 \leq y \leq N_T$ and $1 \leq k \leq N$).

The adding units 220-1 to 220-$N_R$ perform interference cancelling by subtracting these interference replicas $\mathbf{r}^i_{y,k}$ from the reception signals, and thereby the repetition processing repeats one cycle. In the present embodiment similar to the first embodiment, the processing repeats. If no errors occur in all of the decoders 260-1 to 260-$N_T$ or the processing has been repeated the given number of times, the repetition terminates and the decoders 260-1 to 260-$N_T$ output information bits. Similar to the first embodiment, the determination of the presence or absence of an error may be performed by the transmitter appending the CRC (Cyclic Redundancy Check) to the information bits and the receiver detecting an error. In the present embodiment, the interference replica generator 390 and the adding units 220-1 to 220-$N_R$ function as an interference canceller.

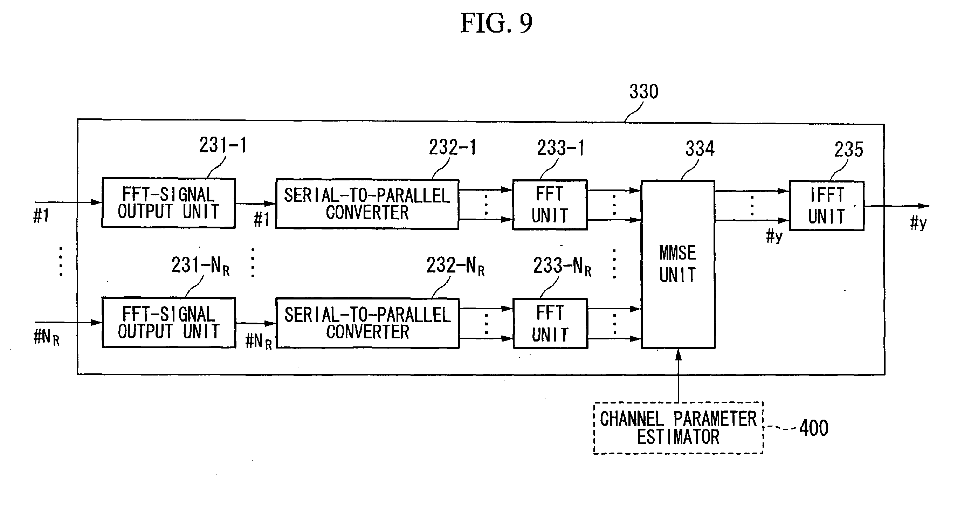

FIG. 9 shows a block diagram of an outline configuration of a part of the signal detector 330 that processes the k-th transmission symbol $s_y$ (k) transmitted by the y-th antenna.
The signals output from the adding units 280-1 to 280-$N_R$ to the signal detector 330, from which the interference with respect to the k-th transmission symbol $s^y$ (k) transmitted by the y-th transmission antenna has been cancelled, are denoted as $r_c^y$ (k).
The signal detector 330 of the wireless receiver in the present embodiment includes multiple groups of the FFT-signal output unit 231, the serial-to-parallel converter 232, and the FFT unit 235, the number of which corresponds to the number of reception antennas $N_R$×the number of transmission antennas $N_T$×the number of transmission symbols N. However, FIG. 9 shows only $N_R$ groups thereof that perform processing for the k-th transmission symbol $s_y$ (k) transmitted by the k-th antenna. Although multiple groups of the MMSE unit 334 and the IFFT unit 17, the number of which corresponds to the number of transmission antennas $N_T$×the number of transmission symbols N, are included, one of the groups that performs processing for the k-th transmission symbol $s_y$ (k) transmitted by the k-th antenna is shown in FIG 9.

The FFT-signal output units (section extractors) 231-1 to 231-$N_R$ receive $N_R$ signal vectors $r_c^y$ (k) after interferences have been cancelled from the reception signals from the reception antennas 210-1 to 210-$N_R$, and outputs signals in a section including all $s_y$ (k) from among the received signals. In other words, similar to the first embodiment, each of the FFT-signal output units 231-1 to 231-$N_R$ sets the start position of the section to the position of the transmission symbol $s_y$ (k) of an earliest wave, and extracts and outputs the path number L of signals in the section, or signals in a section corresponding to the maximum delay time among the paths.
As a result, the signal $r_c^y$ (k) includes only the element $s_y$ (k) if the interference cancelling has been perfectly performed similar to the case of FIG 3. Therefore, the FFT units 233-1 to 233-$N_R$ Fourier-transform the signals in the section including all of the elements $s_y$ (k) output from the FFT-signal output units 231-1 to 231-$N_R$ so that no errors due to the Fourier transform occur.

The serial-to-parallel converters 232-1 to 232-$N_R$ perform serial-to-parallel conversion on the signals received from the FFT-signal output units 231-1 to 231-$N_R$.
The FFT units (Fourier transformers) 233-1 to 231-$N_R$ Fourier-transform the signals received from the serial-to-parallel converters 232-1 to 232-$N_R$ into frequency domain signals. An $N_R$×1 vector including the outputs of the FFT units 233-1 to 233-$N_R$ as elements is denoted as $R_c^{i\,y,\,k}$ (w).

A channel-parameter estimator 400 calculates channel estimates $[H^m (0) \cdots H^m (L-1)]^T$ from pilot signals or transmission symbol replicas. A method of calculating the channel estimates is disclosed in "T. Abe, T. Matsumoto, 'Space-Time Turbo Equalization in Frequency-Selective MIMO Channels', IEEE trans. on VT, Vol. 52, No. 3, MAY, 2003.", for example.

An MMSE unit (equalizer) 334 performs frequency domain conversion of the channel estimates for each element sequence thereof. When an element of the x-th row and the y-th column of the p-th path channel-estimate matrix $H^m$ (p) calculated by the channel-parameter estimator 400 is $h^m xy$ (p) (the p-th path channel-estimate between the x-th reception antenna and the y-th transmission antenna), the MMSE unit 334 performs time-to-frequency conversion on $[h^m xy(0)\cdots h^m xy(L-1)]$ to acquire $N_R$×$N_T$ transfer function matrix $H^m$ (w) including these elements. Further, the MMSE unit 334 calculates an MMSE weighting coefficient using Expression (19) and the transfer function matrix $H^m$ (w).

[Expression 20]

$$\mathbf{M}(w) = \mathbf{H}^m(w)\left(\mathbf{H}^{mH}(w)\mathbf{D}_y\mathbf{H}^m(w) + \sigma_n^2\,\mathbf{I}\right)^{-1}$$

(19)

H indicates complex conjugate transpose of a matrix. $\sigma_n^2$ is the average reception noise power and calculated by the channel parameter estimator 400 from the pilot signals or the transmission symbol replicas similarly to the first embodiment. I is a unit matrix.
In lieu of the MMSE weighting coefficient of Expression (19), another method may be used (for example, an MMSE weighting coefficient disclosed in "Throughput Performance of Frequency-domain Iterative PIC with 2 Dimensional MMSE Weight for SC-MIMO Multiplexing" by Nakajima and Adachi, technical report of IEICE RCS2005-88).

Since the desired symbol is the symbol transmitted from the y-th transmission antenna, the MMSE unit 334 shown in FIG. 9 need not use all of the MMSE weighting coefficients indicated by Expression (19), and calculates an MMSE weighting coefficient using Expression (20) obtained by extraction of necessary coefficients.

[Expression 21]

$$M_y(w) = \frac{\mathbf{H}_y^m(w)}{\mathbf{H}_y^{mH}(w)\,\mathbf{H}_y^m(w) + \sigma_n^2}$$

(20)

$H_y^m(w)$ is the y-th row vector of $H^m(w)$.

The MMSE weighting coefficients may be calculated using Expression (21) in consideration of interference cancelling residual of the CCI. Expression (21) is also an expression where the desired symbol is the symbol transmitted from the y-th antenna.

[Expression 22]

$$\mathbf{M}(w) = \mathbf{H}^m(w)\left(\mathbf{H}^{mH}(w)\mathbf{H}^m(w) + \sigma_n^2 \mathbf{I}\right)^{-1}$$

(21)

Dy is a covariance matrix of the CCI cancelling residual and expressed as $D_y = \text{diag}[d_{y,1} \cdots d_{y,NT}]$. $D_y$ on-diagonal element is expressed by Expression (22).

[Expression 23]

$$d_{y,y'} = \begin{cases} 1 - \dfrac{1}{N}\sum_{k=1}^{N}\left|s_y^i(k)\right|^2 & y \neq y' \\ 1 & \textit{otherwise} \end{cases}$$

(22)

$s_y^i(k)$ is the transmission symbol replica of the k-th symbol transmitted by the y-th transmission antenna.

When using the Expressions (19) or (21) as the MMSE weighting coefficients, the MMSE unit 334 performs frequency domain equalization by premultiplying the vector $R_c^{i,y,k}(w)$ including the outputs of the FFT unit 15 as elements by the y-th row vector $M_y^H(w)$ of the MMSE weighting coefficient matrix $M^H(w)$ at each frequency point, and detects the k-th transmission-symbol estimate of the y-th transmission antenna.

An IFFT unit (estimate calculator) 235 inversely Fourier transforms the frequency-domain k-th transmission-symbol estimate of the y-th transmission antenna into a time-domain estimate to calculate the time-domain k-th transmission-symbol estimate of the y-th transmission antenna.

In the present embodiment similar to the first embodiment, the decoders 260-1 to 260-$N_T$ acquire information bits by repeating these processes for the same reception signal. Since there is no output of the decoders 260-1 to 260-

$N_T$ at the first process, the MMSE unit 334 of the signal detector 330 performs frequency domain equalization without the adding units 280-1 to 280-$N_R$ performing the interference cancelling. At this time, an error due to the Fourier transform performed by the FFT units 233-1 to 233-$N_R$ occurs. The MMSE unit 334 performs frequency domain equalization by premultiplying the signal R (w) that is the frequency domain signal converted from the reception signal at each frequency point w by the complex conjugate transpose matrix of Expression (19), for example. Thereby, the MMSE unit 334 detects estimates of all the transmission symbols transmitted by the y-th transmission antenna. The IFFT unit 235 inversely Fourier transforms these estimates into the time-domain estimates and outputs the time-domain transmission-symbol estimates.

Although an explanation was given in the present embodiment using the MIMO system spatially multiplexed to increase the throughput, multiple transmission and reception antennas may be used for the diversity effect. Further, the same data may be transmitted from multiple transmission antennas.

[Example of Calculator Simulation]

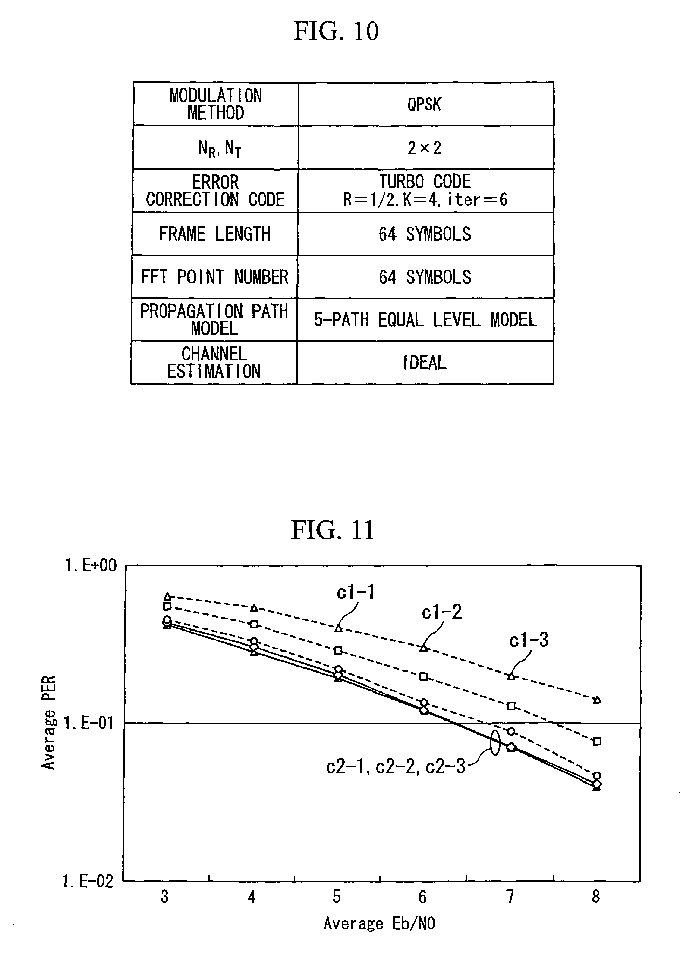

Performance evaluation was made by the calculator simulation according to the present embodiment. As shown in FIG 10, the simulation conditions are that the modulation method is QPSK, the number of transmission and reception antennas are two of each, the error correction code is turbo code with an encoding rate of 1/2, the frame length is 64 symbols, the FFT point is 64 points, the propagation path model is that of a 5-path equal level model, and the channel estimation is ideal (there is no estimation error).

The number of repetition times of the wireless receiver is set to three. It is assumed in the present simulation that there is no interference by the previous block.
FIG. 11 shows a simulation result. c1-1, c1-2, and c1-3 shown in FIG. 11 are cases in which the effect when not using guard intervals is not considered. c2-1, c2-2, and c2-3 are the properties of the method according to the present invention. Each delayed wave is assumed to arrive at an equal interval. The comparison according to a 1-point interval, a 5-point interval, and a 10-point interval was made with the FFT point as an interval unit. c1-1 and c2-1 correspond to a 1-point delay interval, c1-2 and c2-2 correspond to a 5-point delay interval, and c1-3 and c2-3 correspond to a 10-point delay interval. As a result, the properties degrade as the delay interval becomes larger in the conventional method. On the other hand, the properties are not affected by the delay interval in the suggested method. Therefore, it can be understood that interference can be suppressed without decreasing the transmission efficiency since the properties are not degraded due to the delay waves even when guard intervals are not used in the present invention.

The case of using a PIC (Parallel Interference Canceller) capable of parallel processing per symbol or a transmission symbol sequence as the interference cancelling method using a combination of the interference replica generator and the adding unit was explained in the first and the second embodiments. However, an SIC (Successive Interference Canceller) capable of sequential processing per symbol or a transmission symbol sequence may be used.

Although the interference replicas are generated from the output of the decoder in the first and the second embodiments, the interference replicas may be generated from the output of the MAP detector. Although the interference replica generator generates interference replicas based on the encoding-bit log-likelihood ratios output by the decoder, the decoder may output encoding bits by hard-deciding the encoding-bit log-likelihood ratios, and thereby generate interference replicas based on the encoding bits. Further, the interleaver need not be used on the transmitting side. In this case, the interleaver and the deinterleaver are unnecessary on the receiving side.

Although it was explained in the first and the second embodiments that the wireless receiver includes multiple groups of the processing units and parallelly performs the processing for each desired transmission symbol, each reception antenna, or each transmission antenna, the number of the multiple groups may be reduced by the same processing unit performing the processing for each desired transmission symbol, each reception antenna, or each transmission antenna multiple number of times.

A program for implementing the function of each processing unit in the first and the second embodiments may be stored in a computer-readable recording medium so that a computer system can read and execute the program, and thereby each processing is performed. The "computer system" includes an OS and hardware such as a peripheral device.

The "computer-readable recording medium" includes a flexible disk, an optical disc, a portable medium such as a ROM, a CD-ROM, and the like, and a storage device such as a hard disk installed in a computer system. The "computer-readable recording medium" includes a medium dynamically storing a program for a short period such as a communication line when a program is transmitted through a network such as the Internet or a communication line such as a telephone line, and a medium storing a program for a given period such as volatile memory in a computer system of a server or a client in the above case. The program may be for implementing a part of the aforementioned functions or for implementing the aforementioned functions with a combination of the program and another program stored in the computer system.

Although the embodiments of the present invention were explained in detail with reference to the accompanying drawings, the detailed configuration is not limited to these embodiments, and various modifications can be made without departing from the scope of the present invention.

INDUSTRIAL APPLICABILITY

The present invention is suitable for a wireless receiver, a wireless communication system, and a wireless receiving method for compensating inter symbol interference using frequency domain equalization without using a guard interval. However, the present invention is also suitable for a wireless receiver, a wireless communication system, and a wireless receiving method that use a guard interval since the effect of the present invention can be attained when a delayed wave, the length of which exceeds that of the guard interval, arrives.

**Claims**

1. A wireless receiver, comprising:

   an interference canceller that generates replicas of interference signals with respect to a desired symbol and cancels the interference signals from reception signals using the replicas;
   a section extractor that extracts reception signals in a section corresponding to the desired symbol from among the reception signals from which the interference signals have been cancelled;
   a Fourier transformer that Fourier transforms the reception signals extracted by the section extractor into frequency domain signals;
   an equalizer that performs frequency domain equalization for the frequency domain signals generated by the Fourier transformer; and
   an estimate calculator that calculates an estimate of the desired symbol by inversely Fourier transforming the frequency domain signals subjected to the frequency domain equalization performed by the equalizer.

2. The wireless receiver according to claim 1, wherein the section extractor sets a start position of the section based on a position of the desired symbol in an earliest wave.

3. The wireless receiver according to claim 2, wherein the section extractor changes the length of the section according to the maximum delay amount of delayed waves.

4. The wireless receiver according to claim 1, wherein
   the section extractor changes the length of the section according to the maximum delay amount of delayed waves, and
   the Fourier transformer changes an FFT point for a Fourier transform based on the maximum delay amount of the delayed waves.

5. The wireless receiver according to any one of claims 1 to 4, further comprising
   a reliability calculator that calculates reliability information for each bit of the estimate calculated by the estimate calculator, wherein
   the interference canceller generates the replicas based on the reliability information calculated by the reliability calculator.

6. The wireless receiver according to claim 5, further comprising
   a decoder that error-correction-decodes the reliability information calculated by the reliability calculator, wherein
   the interference canceller generates the replicas based on the reliability information error-correction-decoded by the decoder.

7. A wireless receiver, comprising:

   an interference canceller that generates replicas of interference signals with respect to a desired symbol and cancels the interference signals from reception signals using the replicas;
   a section extractor that extracts reception signals in a section corresponding to the desired symbol from among the reception signals from which the interference signals have been cancelled;
   a Fourier transformer that Fourier transforms the reception signals extracted by the section extractor into frequency domain signals;
   an equalizer that performs frequency domain equalization for the frequency domain signals generated by the Fourier transformer to generate a plurality of sequences of signals corresponding to transmission source signals;

and

an estimate calculator that calculates an estimate of the desired symbol by inversely Fourier transforming the sequences of the signals generated by the equalizer for each of the sequences.

8. A wireless communication system, comprising:

the wireless receiver according to claim 7; and
a wireless transmitter that transmits a plurality of different signals from a plurality of transmission antennas.

9. A wireless receiving method for a wireless receiver, comprising:

a first step of generating replicas of interference signals with respect to a desired symbol and cancelling the interference signals from reception signals using the replicas, by the wireless receiver;
a second step of extracting reception signals in a section corresponding to the desired symbol from among the reception signals from which the interference signals have been cancelled, by the wireless receiver;
a third step of Fourier transforming the reception signals extracted at the second step into frequency domain signals, by the wireless receiver;
a fourth step of performing frequency domain equalization for the frequency domain signals generated at the third step, by the wireless receiver; and
a fifth step of calculating an estimate of the desired symbol from the frequency domain signals subjected to the frequency domain equalization at the fourth step, by the wireless receiver.

10. A program that causes a computer to function as:

an interference canceller that generates replicas of interference signals with respect to a desired symbol and cancels the interference signals from reception signals using the replicas;
a section extractor that extracts reception signals in a section corresponding to the desired symbol from among the reception signals from which the interference signals have been cancelled;
a Fourier transformer that Fourier transforms the reception signals extracted by the section extractor into frequency domain signals;
an equalizer that performs frequency domain equalization for the frequency domain signals generated by the Fourier transformer; and
an estimate calculator that calculates an estimate of the desired symbol from the frequency domain signals subjected to the frequency domain equalization performed by the equalizer.

# FIG. 1

INFORMATION BITS → ENCODER (101) → INTERLEAVER (102) → MODULATOR (103) → 104

FIG. 2

EP 2 023 519 A1

# FIG. 3

# FIG. 4

EARLIEST WAVE — sk

DELAYED WAVE1 — sk

DELAYED WAVE L-1 — sk

ALREADY CANCELLED AS INTERFERENCE WAVES

FFT SECTION FORCUSING ON sk

## FIG. 5

```
                    START

  S1          FIRST           No      SUBTRACT LOG LIKELIHOOD RATIOS
            PPROCESSING  ─────────→    BEFORE ERROR CORRECTION        S11
                ?
              Yes                        INTERLEAVING                 S12

                                      REPEAT FOR NUMBER OF SYMBOLS    S13

  RECEPTION                            GENERATE INTERFERENCE REPLICA  S14
   SIGNAL  ──────────────────────→
                                           CANCEL INTERFERENCE
            SERIAL-TO-PARALLEL            FROM RECEPTION SIGNAL       S15
               CONVERSION
                                  S2        SET FFT SIGNAL            S16

            FOURIER TRANSFORM               SERIAL-TO-PARALLEL
                                  S3           CONVERSION            S17

               FREQUENCY                   FOURIER TRANSFORM         S18
          DOMAIN EQUALIZATION
                                  S4           FREQUENCY
                                          DOMAIN EQUALIZATION        S19
         INVERSE FOURIER TRANSFORM
                                  S5     INVERSE FOURIER TRANSFORM   S20
               DETECT MAP
        OUTPUT LOG LIKELIHOOD RATIOS          DETECT MAP
                                  S6    OUTPUT LOG LIKELIHOOD RATIOS S21
             DEINTERLEAVING
                                  S7                                 S22
                                             DEINTERLEAVING          S23

            ERROR CORRECTION       S8
               DECODING

                NO ERROR          S9
                   OR            ─────── No
          GIVEN NUMBER OF TIMES
                 ?
               Yes

                 END
```

# FIG. 6

# FIG. 7

# FIG. 8

EP 2 023 519 A1

# FIG. 9

EP 2 023 519 A1

## FIG. 10

| MODULATION METHOD | QPSK |
|---|---|
| $N_R, N_T$ | 2 × 2 |
| ERROR CORRECTION CODE | TURBO CODE R=1/2, K=4, iter=6 |
| FRAME LENGTH | 64 SYMBOLS |
| FFT POINT NUMBER | 64 SYMBOLS |
| PROPAGATION PATH MODEL | 5-PATH EQUAL LEVEL MODEL |
| CHANNEL ESTIMATION | IDEAL |

## FIG. 11

# FIG. 12

PREVIOUS BLOCK

FFT SECTION

# FIG. 13

COPY TO HEAD

GUARD INTERVAL

# FIG. 14

GUARD INTERVAL

FFT SECTION

## INTERNATIONAL SEARCH REPORT

| | International application No. |
|---|---|
| | PCT/JP2007/060985 |

A. CLASSIFICATION OF SUBJECT MATTER
*H04J15/00*(2006.01)i, *H04B1/10*(2006.01)i, *H04B7/005*(2006.01)i, *H04B7/08*
(2006.01)i, *H04L27/01*(2006.01)i

According to International Patent Classification (IPC) or to both national classification and IPC

B. FIELDS SEARCHED

Minimum documentation searched (classification system followed by classification symbols)
H04J15/00, H04B1/10, H04B7/005, H04B7/08, H04L27/01

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)
IEEE

C. DOCUMENTS CONSIDERED TO BE RELEVANT

| Category* | Citation of document, with indication, where appropriate, of the relevant passages | Relevant to claim No. |
|---|---|---|
| X | JP 2005-328311 A   (NTT Docomo Inc.),<br>24 November, 2005 (24.11.05),<br>Par. No. [0048]; Figs. 2, 9<br>& US 2005/0259721 A1     & CN 1697428 A<br>& KR 6047917 A            & EP 1596502 A2 | 1-10 |
| A | JP 2004-208254 A   (Fujitsu Ltd.),<br>22 July, 2004 (22.07.04),<br>Full text; all drawings<br>& EP 1418720 A1            & US 2004/0091057 A1<br>& CN 1499753 A            & KR 2004041498 A | 1-10 |
| A | JP 2005-079911 A   (Fujitsu Ltd.),<br>24 March, 2005 (24.03.05),<br>Full text; all drawings<br>(Family: none) | 1-10 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 August, 2007 (14.08.07) | Date of mailing of the international search report<br>28 August, 2007 (28.08.07) |
|---|---|
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006149660 A

**Non-patent literature cited in the description**

- **T. ABE ; T. MATSUMOTO.** Space-Time Turbo Equalization in Frequency-Selective MIMO Channels. *IEEE trans. on VT,* May 2003, vol. 52 (3